# EUROPÄISCHE PATENTSCHRIFT

(11) **EP 2 977 238 B1**
(45) Veröffentlichungstag und Bekanntmachung des Hinweises auf die Patenterteilung: **06.11.2019**
(21) Anmeldenummer: 15001233.4
(22) Anmeldetag: 25.04.2015
(51) Int. Cl.: B60D 5/00, B62D 47/02

(54) **FAHRZEUGGELENK FÜR EIN GELENKFAHRZEUG MIT DÄMPFUNGSEINRICHTUNG**
VEHICLE JOINT FOR AN ARTICULATED VEHICLE WITH DAMPING DEVICE
ARTICULATION DE VÉHICULE POUR UN VÉHICULE ARTICULÉ DOTÉ D'UN DISPOSITIF D'AMORTISSEMENT

(30) Priorität: 22.07.2014 DE 102014010803
(43) Veröffentlichungstag der Anmeldung: 27.01.2016
(73) Patentinhaber: MAN Truck & Bus SE, 80995 München (DE)
(72) Erfinder: Püschel, Josef, 84144 Geisenhausen (DE)
(74) Vertreter: v. Bezold & Partner Patentanwälte - PartG mbB

(56) Entgegenhaltungen:
- EP-A1- 2 692 555
- DE-A1- 2 929 022
- DE-A1- 3 331 921
- DE-B- 1 229 392

## Beschreibung

Die Erfindung betrifft ein Fahrzeuggelenk für ein Gelenkfahrzeug mit einer Dämpfungseinrichtung zum Dämpfen von Drehbewegungen zwischen zwei Fahrzeugteilen, vorzugweise einem Vorderwagen und einem Hinterwagen eines Gelenkomnibusses.

Gelenkomnibusse weisen einen Vorderwagen und einen Hinterwagen auf, die über ein Fahrzeuggelenk gelenkig miteinander verbunden sind. Um die Drehbewegungen zwischen dem Vorderwagen und dem Hinterwagen zu dämpfen, sind die Fahrzeuggelenke in der Regel mit einer Dämpfungseinrichtung versehen. Aus der DE 20 2010 016 813 U1 ist ein Fahrzeuggelenk für einen Gelenkomnibus mit einer Dämpfungseinrichtung bekannt. Die Dämpfungseinrichtung besteht aus einem linear bewegbaren, horizontal und neben dem Fahrzeuggelenk verbauten Dämpfungszylinder. Dadurch, dass der Dämpfungszylinder seitlich und horizontal neben dem Fahrzeuggelenk verbaut ist, wird dort relativ viel Bauraum beansprucht, der anderweitig genutzt werden könnte. Aus der DE 44 26 725 C1 ist ein anderes Fahrzeuggelenk für einen Gelenkomnibus bekannt. Das Fahrzeuggelenk ist ebenfalls mit einer Dämpfungseinrichtung ausgestattet, die seitlich neben dem Fahrzeuggelenk verbaut ist und in der horizontalen arbeitet, so dass ebenfalls Bauraum seitlich neben dem Fahrzeuggelenk beansprucht wird. Die DE 29 29 022 A1 und die DE 33 31 921 A1 offenbaren ein Fahrzeuggelenk gemäß dem Oberbegriff des Anspruchs 1.

Eine Aufgabe der Erfindung ist es, ein verbessertes und/oder alternatives Fahrzeuggelenk mit Dämpfungsfunktion zur drehbaren Verbindung zweier Fahrzeugteile zu schaffen.

Diese Aufgabe kann mit den Merkmalen des unabhängigen Anspruchs gelöst werden. Vorteilhafte Weiterbildungen der Erfindung können den Unteransprüchen und der folgenden Beschreibung bevorzugter Ausführungsformen der Erfindung entnommen werden.

Die Erfindung schafft ein Fahrzeuggelenk zur drehbaren Verbindung zweier Fahrzeugteile, vorzugsweise eines Vorderwagens und eines Hinterwagens eines Gelenkfahrzeugs, z. B. eines Gelenkomnibusses. Das Fahrzeuggelenk ist mit einer Dämpfungseinrichtung zum Dämpfen von Drehbewegungen zwischen den zwei Fahrzeugteilen ausgestattet. Die Dämpfungseinrichtung zeichnet sich insbesondere dadurch aus, dass sie zweckmäßig nicht in der horizontalen, sondern im Wesentlichen in der vertikalen arbeitet, also vorzugsweise im Wesentlichen aufwärts und abwärts. Im Rahmen der Erfindung umfasst das Merkmal "vertikal arbeitend" insbesondere Ausführungsformen mit Abweichungen von +/- 20°, +/-10° oder +/-5° von der Vertikalen.

Es ist möglich, dass die Dämpfungseinrichtung einen Hydraulikzylinder umfasst.

Ebenso kann die Dämpfungseinrichtung eine Mutter-Spindel-Kombination umfassen.

Die Mutter-Spindel-Kombination ist zweckmäßig in dem Hydraulikzylinder untergebracht.

Der Hydraulikzylinder ist vorzugsweise ein hydraulischer Drehzylinder.

Dadurch, dass die Dämpfungseinrichtung vertikal arbeitet, kann die Dämpfungseinrichtung, insbesondere der Hydraulikzylinder und/oder die Mutter-Spindel-Kombination, stehend verbaut werden. "Stehend" umfasst ebenso wie das Merkmal "vertikal" im Rahmen der Erfindung Ausführungsformen mit Abweichungen von +/- 20°, +/-10° oder +/-5° von der Vertikalen.

Dadurch, dass die Dämpfungseinrichtung vertikal arbeitet, kann die Dämpfungseinrichtung, insbesondere der Hydraulikzylinder und/oder die Mutter-Spindel-Kombination, über und/oder unter dem Drehmittelpunkt des Fahrzeuggelenks angeordnet werden.

Es ist möglich, dass die Dämpfungseinrichtung, insbesondere der Hydraulikzylinder und/oder die Mutter-Spindel-Kombination, im Wesentlichen koaxial zur Gelenkachse des Fahrzeuggelenks verbaut ist.

Die Dämpfungseinrichtung arbeitet zur Dämpfung vorzugsweise rotativ und/oder nicht seitlich translatorisch, insbesondere direkt rotativ, also z. B. ohne seitlich erforderlichen Hebelarm.

Die Dämpfungseinrichtung ist vorzugsweise als hydraulische Dämpfungseinrichtung ausgeführt.

Es ist möglich, dass der Dämpfungsdruck (Drehwinkel) der Dämpfungseinrichtung bei konstanter Winkelgeschwindigkeit linear ist, insbesondere direkt proportional.

Es ist möglich, dass die Dämpfungseinrichtung zwei Arbeitskammern aufweist, zwischen denen Dämpfungsfluid, z. B. Öl, über eine Ventileinrichtung strömbar ist, um die Dämpfung zu erzielen.

Die Ventileinrichtung kann z. B. als Drosselventil ausgeführt sein.

Die Ventileinrichtung kann ferner zumindest ein Proportionalventil umfassen und/oder zum vorzugsweise stufenlosen Einstellen der Dämpfungscharakteristik der Dämpfungseinrichtung ausgeführt sein.

Zu erwähnen ist, dass die Dämpfungseinrichtung gegenüber herkömmlichen Dämpfungseinrichtungen relativ kompakt ist und vorzugsweise seitlich neben dem eigentlichen Fahrzeuggelenk keine beweglichen Dämpfungsteile erfordert und/oder keinen seitlichen Hebelarm erfordert, sondern quasi direkt rotativ wirkt.

Zu erwähnen ist ferner, dass die Dämpfungseinrichtung vorzugsweise wie ein Schwenkantrieb funktionieren und/oder ausgeführt sein kann. Der Schwenkantrieb wird allerdings nicht als Antrieb genutzt, sondern als Dämpfungseinrichtung. Die Dämpfung kann insbesondere dadurch erreicht werden, dass der Schwenkantrieb mit Dämpffluid (z. B. Öl) vorgefüllt wird und das Dämpfungsfluid durch eine geeignete Ventileinrichtung zwischen zwei Arbeitskammern strömen muss.

Zu erwähnen ist außerdem, dass insbesondere das Merkmal "vertikal arbeitend" und/oder "stehen verbaut" im Rahmen der Erfindung breit auszulegen ist und zweckmäßig Ausführungsformen mit Abweichungen von +/- 20°, +/-10° oder +/-5° von der Vertikalen umfasst.

Die Erfindung ist nicht auf ein Fahrzeuggelenk beschränkt, sondern umfasst auch ein Gelenkfahrzeug, vorzugsweise einen Gelenkomnibus mit einem Vorderwagen und einem Hinterwagen und einem Fahrzeuggelenk zur Verbindung derselben wie hierin offenbart.

Die zuvor beschriebenen bevorzugten Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine Draufsicht auf ein Fahrzeug mit einem Fahrzeuggelenk gemäß einer Ausführungsform der Erfindung,
- Figur 2: zeigt eine vergrößerte Draufsicht auf das Fahrzeuggelenk der Figur 1 und
- Figur 3: zeigt eine Seitenansicht des Fahrzeuggelenks der Figur 2.

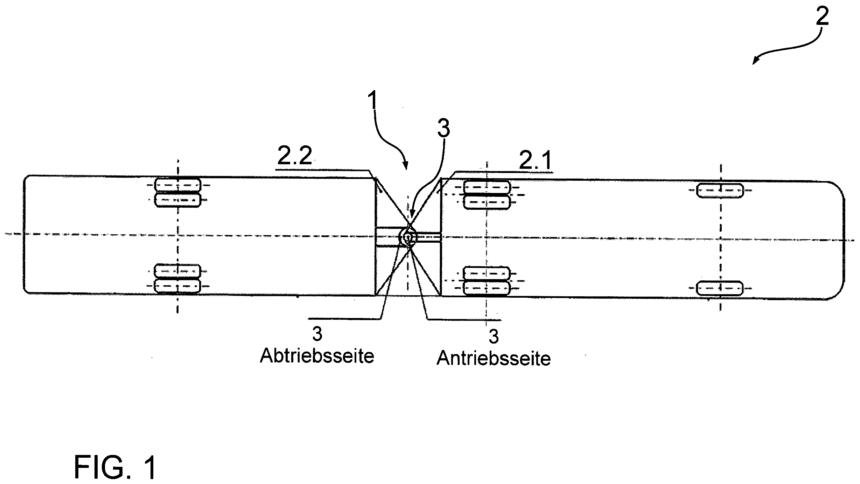

Figur 1 zeigt eine Draufsicht auf ein Gelenkfahrzeug 2, insbesondere einen Gelenkomnibus, und ein Fahrzeuggelenk 1 gemäß einer Ausführungsform der Erfindung. Das Fahrzeuggelenk 1 dient zur drehbaren Verbindung zweier Fahrzeugteile 2.1 und 2.2, insbesondere einem Vorderwagen 2.1 (Antriebsteil) und einem Hinterwagen 2.2 (Abtriebsteil) des Gelenkomnibusses.

Das Fahrzeuggelenk 1 ist mit einer schematisch dargestellten Dämpfungseinrichtung 3 zum Dämpfen von Drehbewegungen zwischen den zwei Fahrzeugteilen 2.1 und 2.2 ausgestattet. Die Dämpfungseinrichtung 3 ist mit ihrer Antriebseite zweckmäßig mit dem Vorderwagen 2.1 verbunden und mit ihrer Abtriebseite mit dem Hinterwagen 2.2 verbunden. Die Dämpfungseinrichtung 3 weist einen Hydraulikzylinder, insbesondere einen Drehzylinder auf, in dem eine Spindel-Mutter-Kombination untergebracht ist.

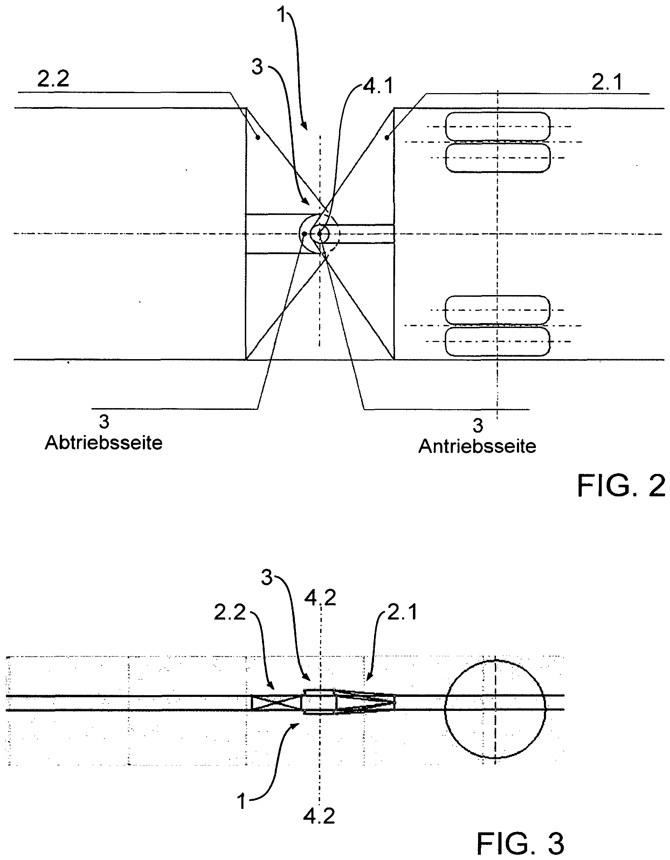

Das Fahrzeuggelenk 1, insbesondere die Dämpfungseinrichtung 3, wird nachfolgend unter Bezugnahme auf die Figuren 2 und 3 beschrieben, wobei Figur 2 eine Draufsicht und Figur 3 eine zugehörige Seitenansicht zeigt.

Die Dämpfungseinrichtung 3 ist als im Wesentlichen vertikal wirksame und folglich im Wesentlichen aufwärts und abwärts arbeitende Dämpfungseinrichtung 3 ausgeführt. Die Dämpfungseinrichtung 3 kann somit stehend und quasi koaxial zur Drehachse 4.2 des Fahrzeuggelenks 1 verbaut werden. Die Dämpfungseinrichtung 3 ist zweckmäßig über und/oder unter dem Drehmittelpunkt 4.1 des Fahrzeuggelenks 1 verbaubar, insbesondere so, dass der Hydraulikzylinder und die Mutter-Spindel-Kombination im Wesentlichen koaxial zur Drehachse 4.2 des Fahrzeuggelenks 1 angeordnet sind. Die Dämpfungseinrichtung 3 kann folglich quasi zur Dämpfung direkt rotativ wirken. Sie erfordert also zweckmäßig keine seitliche Umlenkung oder keinen seitlichen Hebelarm. Der Dämpfungsdruck der Dämpfungseinrichtung 3 ist quasi linear bei konstanter Winkelgeschwindigkeit.

Die Dämpfungseinrichtung 3 arbeitet folglich nicht in der horizontalen und ist nicht seitlich neben dem Fahrzeuggelenk 1 verbaut, so dass dort Bauraum für andere Zwecke zur Verfügung steht.

Die Dämpfungseinrichtung 3, die in den Figuren nur schematisch angedeutet ist, kann z. B. wie der in der Auslegeschrift DE 1 229 392 beschriebene Schwenkantrieb funktionieren und/oder ausgeführt sein, so dass für Details auf den Inhalt der Auslegeschrift DE 1 229 392 verwiesen wird.

Insbesondere lehrt die Auslegeschrift DE 1 229 392, dass abgesehen von den sogenannten hydraulischen Drehkolben, wobei der Drehwinkel maximal nur 320° beträgt und wobei die Welle radialen Wechselbelastungen ausgesetzt ist, hydraulische Schwenkantriebe im allgemeinen aus einem in einem Gehäuse abgedichteten, axial verschiebbaren, gegen Verdrehung gesicherten Kolben bestehen, der in Längserstreckung durchbohrt und mit einem Innengewinde versehen ist. In Letzteres ist eine drehbar gelagerte, in axialer Richtung festgelegte Welle, die zwischen den Lagerzapfen ein zugeordnetes Außengewinde aufweist, eingeschraubt. Ferner weist das Gehäuse unweit beider Stirnflächen je einen Anschlussstutzen für den durch einen vorgeschalteten Regler steuerbaren Druckölzu- und Abfluss auf. Strömt nun Drucköl durch einen der Anschlussstutzen in das Gehäuse ein, so wird der Kolben nach der dem Druckölzufluss entgegengesetzten Seite hin verschoben. Dabei wird zwangläufig die in axialer Richtung arretierte Welle gedreht.

Der Schwenkantrieb wird allerdings nicht als Antrieb genutzt, sondern als Dämpfungseinrichtung 3. Die Dämpfung wird insbesondere dadurch erreicht, dass der Schwenkantrieb mit Dämpffluid (z. B. Öl) vorgefüllt wird und das Dämpfungsfluid durch eine geeignete Ventileinrichtung zwischen zwei Arbeitskammern strömen muss. Die Ventileinrichtung kann z. B. als Drosselventil oder als komplexere, z. B. zumindest ein Proportionalventil umfassende, Ventilschaltung ausgeführt sein, um die Dämpfungscharakteristik der Dämpfungseinrichtung 3 zweckmäßig stufenlos einstellen zu können.

Die Erfindung ist nicht auf die oben beschriebenen bevorzugten Ausführungsformen beschränkt. Vielmehr ist eine Vielzahl von Varianten und Abwandlungen möglich, die ebenfalls von den Anspruchsmerkmalen Gebrauch machen und deshalb in den Schutzbereich fallen.

### Bezugszeichenliste

- 1: Fahrzeuggelenk
- 2: Gelenkfahrzeug
- 2.1: Fahrzeugteil (Vorderwagen)
- 2.2: Fahrzeugteil (Hinterwagen)
- 3: Dämpfungseinrichtung
- 4.1: Drehmittelpunkt des Fahrzeuggelenks
- 4.2: Drehachse des Fahrzeuggelenks

## Patentansprüche

1. Fahrzeuggelenk (1) für ein Gelenkfahrzeug (2) zur drehbaren Verbindung zweier Fahrzeugteile (2.1, 2.2), vorzugsweise einem Vorderwagen und einem Hinterwagen eines Gelenkomnibusses, wobei das Fahrzeuggelenk (1) eine als vertikal arbeitende Dämpfungseinrichtung (3) ausgeführte Dämpfungseinrichtung (3) zum Dämpfen von Drehbewegungen zwischen den zwei Fahrzeugteilen (2.1, 2.2) aufweist, **dadurch gekennzeichnet, dass** die Dämpfungseinrichtung (3) einen Hydraulikzylinder und eine Mutter-Spindel-Kombination umfasst, die in dem Hydraulikzylinder untergebracht ist.

2. Fahrzeuggelenk (1) nach Anspruch 1, **dadurch gekennzeichnet, dass** der Hydraulikzylinder ein hydraulischer Drehzylinder ist.

3. Fahrzeuggelenk (1) nach Anspruch 1 oder 2, **dadurch gekennzeichnet, dass** die Dämpfungseinrichtung (3), insbesondere der Hydraulikzylinder und/oder die Mutter-Spindel-Kombination, stehend verbaut ist.

4. Fahrzeuggelenk (1) nach einem der vorhergehenden Ansprüche, **dadurch gekennzeichnet, dass** die Dämpfungseinrichtung (3), insbesondere der Hydraulikzylinder und/oder die Mutter-Spindel-Kombination, über und/oder unter dem Drehmittelpunkt (4) des Fahrzeuggelenks (1) angeordnet ist.

5. Fahrzeuggelenk (1) nach einem der vorhergehenden Ansprüche, **dadurch gekennzeichnet, dass** die Dämpfungseinrichtung (3), insbesondere der Hydraulikzylinder und/oder die Mutter-Spindel-Kombination, koaxial zur Gelenkachse (4) verbaut ist.

6. Fahrzeuggelenk (1) nach einem der vorhergehenden Ansprüche, **dadurch gekennzeichnet, dass** die Dämpfungseinrichtung (3) zur Dämpfung rotativ arbeitet und vorzugsweise nicht seitlich translatorisch.

7. Fahrzeuggelenk (1) nach einem der vorhergehenden Ansprüche, **dadurch gekennzeichnet, dass** die Dämpfungseinrichtung (3) als hydraulische Dämpfungseinrichtung (3) ausgeführt ist.

8. Fahrzeuggelenk (1) nach einem der vorhergehenden Ansprüche, **dadurch gekennzeichnet, dass** der Dämpfungsdruck der Dämpfungseinrichtung (3) bei konstanter Winkelgeschwindigkeit linear ist.

9. Fahrzeuggelenk (1) nach einem der vorhergehenden Ansprüche, **dadurch gekennzeichnet, dass** die Dämpfungseinrichtung (3) zwei Arbeitskammern aufweist, zwischen denen Dämpfungsfluid über eine Ventileinrichtung strömbar ist, um die Dämpfung zu erzielen.

10. Fahrzeuggelenk (1) nach Anspruch 9, **dadurch gekennzeichnet, dass** die Ventileinrichtung ein Drosselventil umfasst.

11. Fahrzeuggelenk (1) nach Anspruch 9 oder 10, **dadurch gekennzeichnet, dass** die Ventileinrichtung zumindest ein Proportionalventil umfasst und/oder zum vorzugsweise stufenlosen Einstellen der Dämpfungscharakteristik ausgeführt ist.

12. Gelenkfahrzeug (2), vorzugsweise Gelenkomnibus, mit einem Fahrzeuggelenk (1) nach einem der vorhergehenden Ansprüche.

## Claims

1. Vehicle articulated joint (1) for an articulated vehicle (2) for rotatably connecting two vehicle parts (2.1, 2.2), preferably a forward section and a rear section of an articulated bus, the vehicle articulated joint (1) comprising a damping device (3) embodied as a vertically functioning damping device (3) for damping rotational movements between the two vehicle parts (2.1, 2.2), **characterized in that** the damping device (3) comprises a hydraulic cylinder and a nut-spindle combination which is accommodated in the hydraulic cylinder.

2. Vehicle articulated joint (1) according to Claim 1, **characterized in that** the hydraulic cylinder is a rotary hydraulic cylinder.

3. Vehicle articulated joint (1) according to Claim 1 or 2, **characterized in that** the damping device (3), in particular the hydraulic cylinder and/or the nut-spindle combination, is fitted upright.

4. Vehicle articulated joint (1) according to one of the preceding claims, **characterized in that** the damping device (3), in particular the hydraulic cylinder and/or the nut-spindle combination, is arranged above and/or below the centre of rotation (4) of the vehicle articulated joint (1).

5. Vehicle articulated joint (1) according to one of the preceding claims, **characterized in that** the damping device (3), in particular the hydraulic cylinder and/or the nut-spindle combination, is fitted coaxially with the axis of articulation (4) .

6. Vehicle articulated joint (1) according to one of the preceding claims, **characterized in that** for damping the damping device (3) functions rotationally and preferably non-linearly sideward.

7. Vehicle articulated joint (1) according to one of the preceding claims, **characterized in that** the damping device (3) is embodied as a hydraulic damping device (3).

8. Vehicle articulated joint (1) according to one of the preceding claims, **characterized in that** the damping pressure of the damping device (3) is linear at a constant angular velocity.

9. Vehicle articulated joint (1) according to one of the preceding claims, **characterized in that** the damping device (3) comprises two working chambers, between which damping fluid is able to flow via a valve device, in order to achieve the damping.

10. Vehicle articulated joint (1) according to Claim 9, **characterized in that** the valve device comprises a restriction valve.

11. Vehicle articulated joint (1) according to Claim 9 or 10, **characterized in that** the valve device comprises at least one proportional valve and/or is designed for preferably continuous adjustment of the damping characteristic.

12. Articulated vehicle (2), especially an articulated bus, having a vehicle articulated joint (1) according to one of the preceding claims.

## Revendications

1. Articulation de véhicule (1) pour un véhicule articulé (2), destinée à réaliser une liaison pivotante entre deux parties de véhicule (2.1, 2.2), de préférence une voiture avant et une voiture arrière d'un autobus articulé, l'articulation de véhicule (1) étant dotée d'un dispositif d'amortissement (3) réalisé sous forme de dispositif d'amortissement (3) à action verticale destiné à amortir les mouvements de rotation entre les deux parties de véhicule (2.1, 2.2), **caractérisée en ce que** le dispositif d'amortissement (3) comprend un vérin hydraulique et une combinaison écrou-broche logée dans le vérin hydraulique.

2. Articulation de véhicule (1) selon la revendication 1, **caractérisée en ce que** le vérin hydraulique est un vérin hydraulique rotatif.

3. Articulation de véhicule (1) selon l'une quelconque des revendications 1 et 2, **caractérisée en ce que** le dispositif d'amortissement (3), en particulier le vérin hydraulique et/ou la combinaison écrou-broche, est monté en position verticale.

4. Articulation de véhicule (1) selon l'une quelconque des revendications précédentes, **caractérisée en ce que** le dispositif d'amortissement (3), en particulier le vérin hydraulique et/ou la combinaison écrou-broche, est disposé au-dessus et/ou au-dessous du centre de rotation (4) de l'articulation de véhicule (1).

5. Articulation de véhicule (1) selon l'une quelconque des revendications précédentes, **caractérisée en ce que** le dispositif d'amortissement (3), en particulier le vérin hydraulique et/ou la combinaison écrou-broche, est monté coaxialement avec l'axe d'articulation (4).

6. Articulation de véhicule (1) selon l'une quelconque des revendications précédentes, **caractérisée en ce que** le dispositif d'amortissement (3) amortit par rotation et de préférence n'amortit pas par translation latérale.

7. Articulation de véhicule (1) selon l'une quelconque des revendications précédentes, **caractérisée en ce que** le dispositif d'amortissement (3) est un dispositif d'amortissement (3) hydraulique.

8. Articulation de véhicule (1) selon l'une quelconque des revendications précédentes, **caractérisée en ce que** la pression d'amortissement du dispositif d'amortissement (3) est linéaire lorsque la vitesse angulaire est constante.

9. Articulation de véhicule (1) selon l'une quelconque des revendications précédentes, **caractérisée en ce que** le dispositif d'amortissement (3) comporte deux chambres de travail entre lesquelles un fluide d'amortissement peut s'écouler par l'intermédiaire d'un dispositif de vanne afin de produire l'amortissement.

10. Articulation de véhicule (1) selon la revendication 9, **caractérisée en ce que** le dispositif de vanne est une vanne d'étranglement.

11. Articulation de véhicule (1) selon l'une quelconque des revendications 9 et 10, **caractérisée en ce que** le dispositif de vanne comprend au moins une vanne proportionnelle et/ou est de préférence construit pour permettre un réglage en continu de la caractéristique d'amortissement.

12. Véhicule articulé (2), de préférence autobus articulé, doté d'une articulation de véhicule (1) selon l'une quelconque des revendications précédentes.
